# EUROPEAN PATENT APPLICATION

(11) **EP 1 714 834 A1**
(43) Date of publication of application: **25.10.2006**
(21) Application number: 05709875.8
(22) Date of filing: 08.02.2005
(51) Int. Cl.: B60R 19/34, F16F 7/12

(54) **IMPACT ABSORBING DEVICE OF VEHICLE**

(30) Priority: 10.02.2004 JP 2004068112
(71) Applicant: SANGO CO., LTD., Nagoya Aichi-ken (JP)
(72) Inventor: SUZUKI, Hiroshi, Yawatayama Kojo, SANGO CO., LTD., Nishikamo-gun, Aichi 4700224 (JP)
(74) Representative: TBK-Patent
(86) International application number: PCT/JP2005/001823
(87) International publication number: WO 2005/075254

(57) **Abstract**

An impact absorbing device of a vehicle, comprising a cylindrical body having step parts and having a diameter gradually changing in the axial direction. The step parts (3) are spirally formed around the axis (4) of the cylindrical body so that an impact energy in the collision of the vehicle can be sufficiently absorbed.

## Description

### Technical Field

The present invention relates to a device for absorbing impact energy at the time of collision of a vehicle.

### Background Art

For the purpose of cushioning the impact at the time of collision of a vehicle on its passenger or passengers, there is known a technique according to which an impact absorbing device (crush box) is placed intervening between a bumper reinforcement and the body frame (a side member), and makes the impact energy be converted into deformation energy according to its plastic deformation so as to absorb the energy. As an example of the impact absorbing devices, the first impact absorbing device consisting of a cylinder in whose outer circumferential face a few grooves are integrally formed and the second impact absorbing device consisting of a hollow tube having a rectangular section in which beads are formed are disclosed in Patent Document 1.

As another example of the impact absorbing devices, the third impact absorbing device in which a plurality of cylindrical energy absorbers differing in diameter are joined with annular step parts in-between to be formed into a stepwise shape tapering in the axial direction and beads extending in the axial direction are formed in the energy absorber of the smallest diameter is disclosed in Patent Document 2.
Patent Document 1: JP-A-2-175452
Patent Document 2: JP-A-8-198039

### Disclosure of the Invention

### Problems to be Solved by the Invention

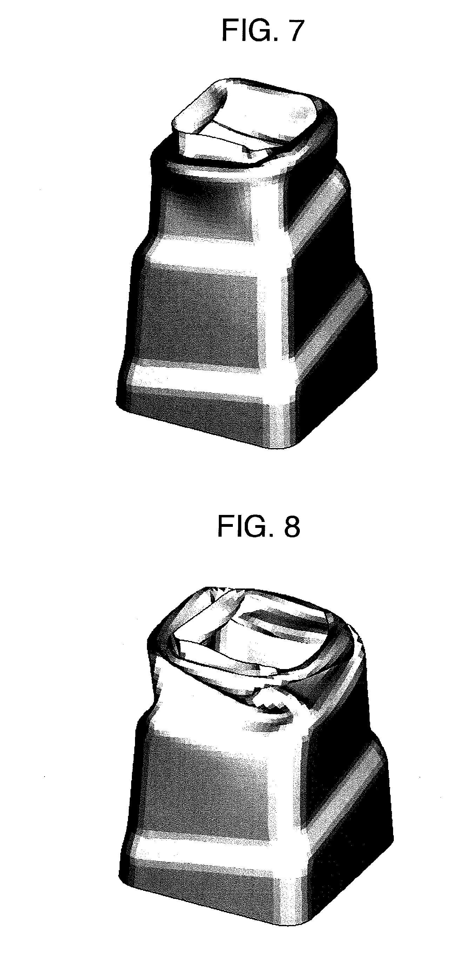

A characteristic required of an impact absorbing device excelling in impact absorbing performance is, in a load characteristics chart relative to displacement as shown in Fig. 6, a diagram of a steep rise of the load in response to the initial displacement without surpassing the proof stress F₀ of the body frame (to enable the impact absorbing device to be deformed before the body frame is) and of maintaining a heavy load relative to any subsequent increase in displacement, namely to increase the area of the hatched part in Fig. 6 to the possible maximum and thereby increase the quantity of the impact energy absorbed.

However, in the first impact absorbing device disclosed in the above Patent Document 1, though it is able to absorb, when an impact load is applied, a heavy load by the initial displacement (start of displacement) as represented by Fig. 6 (I), there is involved a problem that it subsequently becomes unable to sufficiently absorb the impact energy as its diagram steeply falls to compress the area of the hatched part. Or, in the second impact absorbing device disclosed in the above Patent Document 1, and the third impact absorbing device disclosed in the above Patent Document 2, as they involve discontinuous beads or a plurality of annular step parts, plastic deformation intermittently proceeds to give an undulating diagram of steep ups and downs and a diagram of an increase rising stepwise rightward, as represented by Fig. 6 (II), the diagram may surpass F₀ and consequently the body frame may be deformed before the impact absorbing device is.

Therefore, the present invention is intended to provide an impact absorbing device of a vehicle that solves the problems noted above.

### Means to Solve the Problems

In order to solve the problems noted above, an impact absorbing device of a vehicle according to the present invention comprising a cylindrical body which has stepped parts and whose diameter gradually changes in the axial direction is characterized in that the stepped parts are spirally formed around the axis of the cylindrical body.

With this configuration, since the stepped parts formed in the impact absorbing device comprising a cylindrical body whose diameter gradually changes in the axial direction are spirally formed around the axis of the cylindrical body, partial plastic deformation (buckling) proceeds gradually and continuously in a spiral shape from the small diameter side to the large diameter side of the cylindrical body, thereby to cause the load diagram relative to the displacement to be stable, easy in undulation, and thus, it is possible to provide an impact absorbing device of a vehicle excelling in impact energy absorbing characteristic.

Also according to the invention, the stepped parts may as well be configured of a continuous face having an angle of inclination to the axis.

With this configuration, since the stepped parts are configured of a continuous face having an angle of inclination to the axis of the cylindrical body, namely formed of a tapering shape, it is possible to provide an impact absorbing device in which the whole spiral stepped parts do not undergo plastic deformation at once, and which excels in impact energy absorbing characteristic and allows ready formation of the stepped parts.

Further according to the invention, the sectional shape of the stepped parts containing the axis may be formed in a folded U shape.

With the configuration described above, it is possible to provide an impact absorbing device of a vehicle equal, or even superior, to the foregoing in impact energy absorbing characteristic.

### Best Modes for Carrying Out the Invention

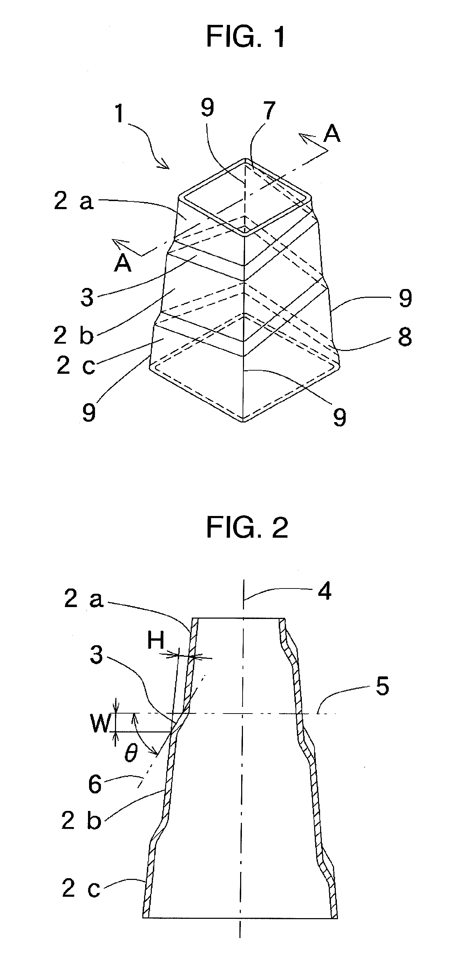

Best modes for carrying out the present invention will be described with reference to embodiments thereof shown in Fig. 1 through Fig. 11.

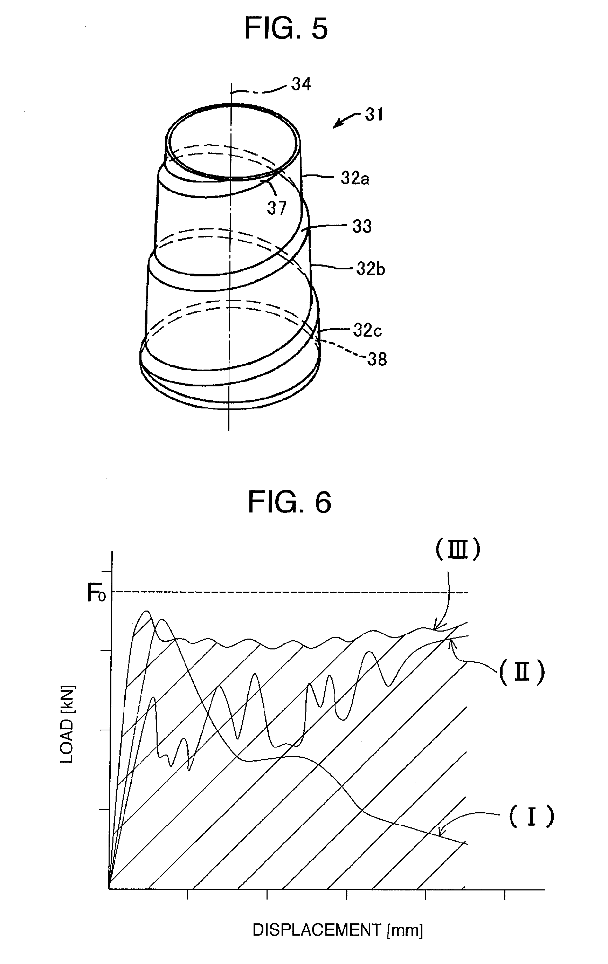

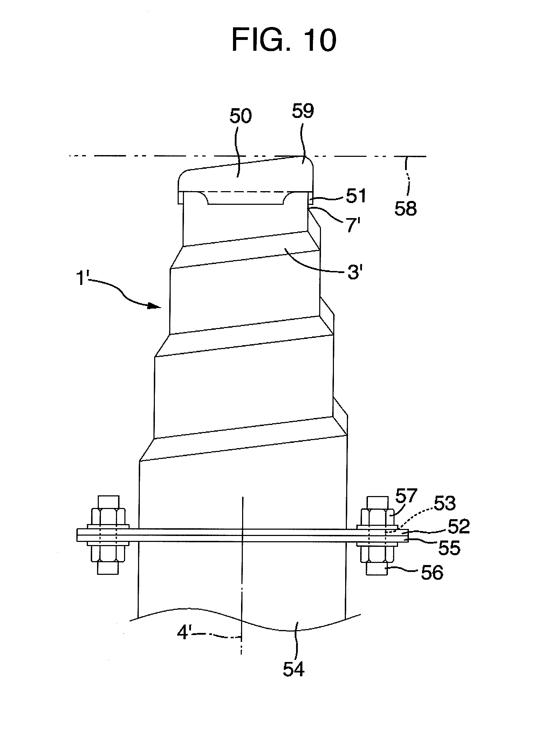

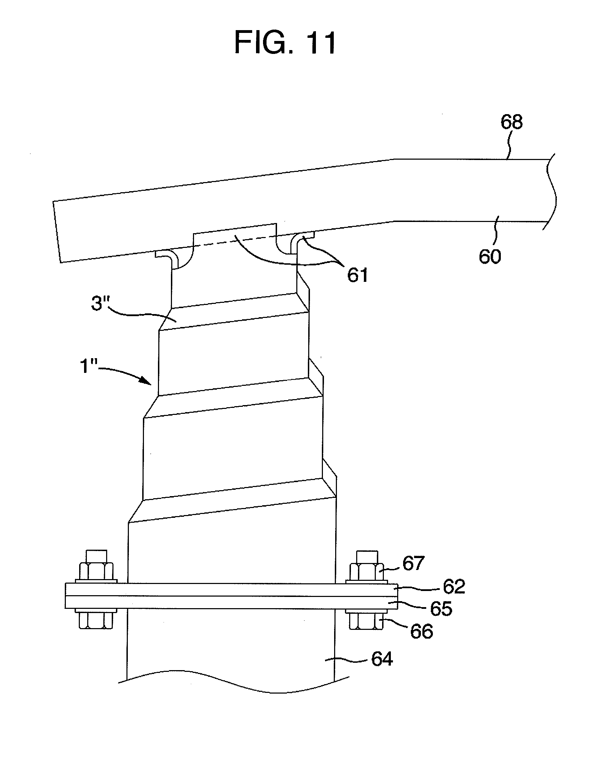

Fig. 1 shows a perspective view of an impact absorbing device which is one embodiment according to the present invention; Fig. 2, a longitudinal section taken along line A-A in Fig. 1; Fig. 3 and Fig. 4, matching sections along line A-A showing another embodiment than the embodiment in Fig. 1; Fig. 5, a perspective view of an impact absorbing device which is still another embodiment according to the invention; Fig. 6, a characteristics chart showing the results of experiments of impact absorbing devices; Fig. 7 through Fig. 9, schematic diagrams showing images of deformation in the impact absorbing device of Fig. 1 over time; and Fig. 10 and Fig. 11, diagrams showing examples of fitting the impact absorbing device of Fig. 1.

An impact absorbing device 1, as shown in Fig. 1 and Fig. 2, is a cylindrical body of a quadrangular pyramid shape comprising a small diameter part 2a, a medium diameter part 2b and a large diameter part 2c consecutive on the same axis, their diameter (width when cut along an orthogonal face 5 to the axis 4) gradually changing in the direction of the axis 4, and in this cylindrical body there are formed spiral step parts 3 composed of a single thread of continuous face around the axis 4 of the cylindrical body. Incidentally, the spiral pitch and the number of threads of the step parts 3 can be selected as desired.

And, the step parts 3, as shown in Fig. 2, are formed on a continuous inclined face 6 having an inclination angle θ to the axis 4 of the cylindrical body, namely formed in a tapering shape. The inclination angle θ, the height H of the step parts 3 and the width W of the step parts 3 can be selected as desired, and each of the inclination angle θ, the height H and the width W is constant as viewed not only in the longitudinal section along line A-A of Fig. 1 but also in any longitudinal section containing the axis 4. Alternatively, the inclination angle θ, the height H and the width W may be continuously increased or decreased from one end part 7 to the other end part 8 of the step parts 3 shown in Fig. 1.

Although the impact absorbing device 1 in the illustrated embodiment is the cylindrical body of quadrangular pyramid shape, it may be in a pyramid shape having a different number of angles, or shaped in a circular cone as shown in Fig. 5 to be described afterwards, an oval cone or an elliptical cone. It may as well be a cylindrical body whose shape gradually varies from a pyramidal shape to a substantially conical shape from one end part to the other end part of the cylindrical body.

As the material of the impact absorbing device 1, for instance, SPH270C or STKM11A of the Japanese Industrial Standards (JIS), high tensile steel or aluminum for weight reduction is used. The plate thickness may be, for instance, 2 mm.

Manufacturing methods of the impact absorbing device 1 include, for instance, a method in which, after a metallic pipe is formed into a conic cylindrical body by a known spinning process or pressing, the cylindrical body is pressed in the axial direction with a punch and a die; a method in which, after a metallic pipe is expanded in diameter into a conic shape with a punch and a die, the cylindrical body is pressed in the axial direction with another punch and die; and a method in which planar materials whose external shape is cut out into a developed shape of the impact absorbing device are roll-bent and joined by welding or otherwise. Apart from these manufacturing methods, it may be fabricated by hydraulic bulge forming (hydroforming).

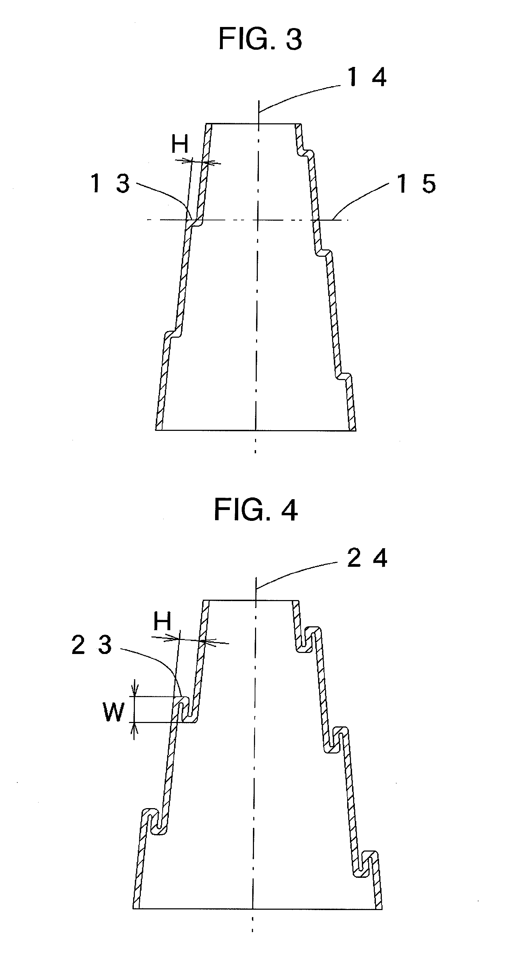

Another embodiment of the step parts 3 may be so formed, as shown in Fig. 3, as to cause a sectional shape of step parts 13 containing an axis 14 to cross the axis 14 orthogonally. The height H of the step parts 13 can be selected as desired, and the height H is constant as viewed not only in the longitudinal section along line A-A of Fig. 1 but also in any longitudinal section containing the axis 14. Alternatively, the height H may be continuously increased or decreased from one end part (corresponding to one end part 7 of Fig. 1) to the other end part (corresponding to the other end part 8 of Fig. 1) of the step parts 13. This embodiment enables the plastic deformation (buckling) of the step parts 13 to take place even more securely.

Also, as still another embodiment of the step parts 3, the sectional shape of step parts 23 containing an axis 24 may be formed in a folded U shape as shown in Fig. 4. The height H of the step parts 23 and the width W of the step parts 23 can be selected as desired, and the shape of the step parts 23 is constant as viewed not only in the longitudinal section along line A-A of Fig. 1 but also in any longitudinal section containing the axis 24. Alternatively, the height H of the step parts 23 and the width W of the step parts 23 may be continuously increased or decreased from one end part (corresponding to one end part 7 of Fig. 1) to the other end part (corresponding to the other end part 8 of Fig. 1) of the step parts 23. This embodiment enables the plastic deformation (buckling) of the step parts 23 to take place even more securely.

Incidentally, as yet another embodiment of the step parts 3, though not shown, a spiral concave groove protruding toward the inside, or a spiral convex thread bulging toward the outside, of the impact absorbing device (cylindrical body) may be formed to constitute step parts. The shapes of the concave groove and the convex thread are limited in no particular way.

As another embodiment of the impact absorbing device 1 according to the invention, what has a configuration provided with a circular conical cylindrical body having a small diameter part 32a, a medium diameter part 32b and a large diameter part 32c consecutive on the same axis, their diameter (width when cut along an orthogonal face to the axis 34) gradually changing in the direction of the axis 34 as shown in Fig. 5 may as well be used. In this cylindrical body, there are formed spiral step parts 33 composed of a single thread of continuous face around the axis 34 of the cylindrical body. The spiral pitch and the number of threads of the step parts 33 can be selected as desired. Alternatively, the height H of the step parts 33 and the width W of the step parts 33 may be continuously increased or decreased from one end part 37 to the other end part 38 of the step parts 33. In this embodiment, as the cylindrical body has a circular conical shape, the step parts 33 constitute a smoothly continuous concentric spiral form with the result that a diagram whose undulation is either eliminated or softened in the characteristics chart shown in Fig. 6.

The result of experiment (a load diagram relative to displacement) of the impact absorbing device 1 shown in Fig. 1 is shown in Fig. 6 (III). At the starting point of deformation (initial displacement), a heavy load was absorbed without allowing the proof stress F₀ of the body frame to be surpassed and, though some undulation arose with a subsequent increase in displacement, a substantially leveling-off diagram manifested itself with the result that an impact absorbing device excelling in impact energy absorbing characteristic was obtained.

The reason why the aforementioned characteristic is achieved is that the spiral formation of the step parts formed in the impact absorbing device consisting of a cylindrical body whose diameter gradually changes in the axial direction around the axis of the cylindrical body causes the plastic deformation of the impact absorbing device to proceed gradually and continuously in a spiral shape from the small diameter side to the large diameter side of the cylindrical body.

Incidentally, since the impact absorbing device 1 shown in Fig. 1 is a quadrangular pyramid and it has four edge parts 9, which are more rigid than common parts (faces), when the edge parts 9 are deformed, more or less undulation of the diagram arises. In this respect, a circular conical impact absorbing device as shown in Fig. 5 can either eliminate or soften this undulation as described above.

Next, schematic diagrams showing images of deformation in the impact absorbing device 1 of Fig. 1 over time are presented in Fig. 7 through Fig. 9. As shown in Fig. 7, when the impact absorbing device 1 suffers an impact, one end part 7 of the step parts 3 is first deformed (buckled), followed by gradual and continuous spiral deformation (buckling) of the cylindrical body from the small diameter side to the large diameter side as shown in Fig. 8 to Fig. 9.

Fig. 10 shows a profile of an example of fitting of the impact absorbing device 1 shown in Fig. 1 and Fig. 2 above to a vehicle without using bumper reinforcement.

Referring to Fig. 10, the tip of the impact absorbing device 1' having the aforementioned step parts 3' is covered with a metal cap 50, which is fixed by welding its extended part 51, and a flange 52 is fixed to the other end part of the device 1' by welding. And fitting holes 53 are formed in the flange 52. For fitting to the vehicle body, for example, the flange 52 is firmly fixed to a flange 55 of a body frame (front side member or the like) 54 with bolts 56 and nuts 57 through the fitting holes 53.
This embodiment has a layout in which the inside 58 of the bumper is in direct contact with the tip of the cap 50 without using any bumper reinforcement such as the one shown in Fig. 11 presented next.

The tip of the cap 50 is formed in an inclined plane, and its convex part 59 protruding outward is formed in a position off the axis 4' of the impact absorbing device 1'. On the side where this convex part 59 and one end part 7' of the step parts 3' are positioned, there is formed the extended part 51 on the convex part 59 side of the cap 50, and one end part 7' of the step parts 3' is arranged immediately behind the convex part 59.
This configuration causes, when the vehicle collides with an object ahead, the convex part 59 of the cap 50 first hits its colliding face (the inside of the bumper) 58 and naturally the impact load first works on one end part 7' of the step parts 3' with the result that deformation of the step parts begins from that one end part 7' and the sequential progress of the subsequent deformation of the step parts 3' is facilitated.

Fig. 11 shows an example of fitting of the impact absorbing device 1 shown in Fig. 1 and Fig. 2 by deforming its tip and using a bumper reinforcement.
In the embodiment shown in Fig. 11, as that shown in Fig. 10 above, the rear end of the impact absorbing device 1" having the step parts 3" is firmly fitted by a flange 62 to a flange 65 of a body frame 64 with bolts 66 and nuts 67. The embodiment shown in this Fig. 11 is a case in which a bumper reinforcement 60 is used, wherein the tip of the impact absorbing device 1" is fixed by welding its extended part 61 to the bumper reinforcement 60. The layout is such that the inside of the bumper comes into contact with an outer side face 68 of this bumper reinforcement 60.

When the impact absorbing device according to the invention is to be positioned, for instance, between a bumper reinforcement and the body frame (side member) of a vehicle, it will be effective in cushioning the impact on the passengers to connect the small diameter part 2a or 32a side, which is deformed first, to the bumper reinforcement and the large diameter part 2c or 32c side, which is deformed later, to the body frame, but connection in the other way around would pose no particular problem.

The present invention described so far can be extensively applied to impact absorbing devices of vehicles, and are suitable for application to, for example, propeller shafts of motor vehicles.

### Brief Description of the Drawings

[Fig. 1] A perspective view of an impact absorbing device which is one embodiment according to the present invention.
[Fig. 2] A section taken along line A-A in Fig. 1.
[Fig. 3] A section matching a section taken along line A-A in Fig. 1 pertaining to another embodiment according to the invention.
[Fig. 4] A section matching a section taken along line A-A in Fig. 1 pertaining to another embodiment according to the invention.
[Fig. 5] A perspective view of an impact absorbing device which is another embodiment according to the invention.
[Fig. 6] A characteristics diagram showing the results of experiments of impact absorbing devices including the embodiment in Fig. 1.
[Fig. 7] A schematic diagram showing an image of initial deformation in the impact absorbing device of Fig. 1.
[Fig. 8] A schematic diagram showing an image of further progress of deformation from Fig. 7.

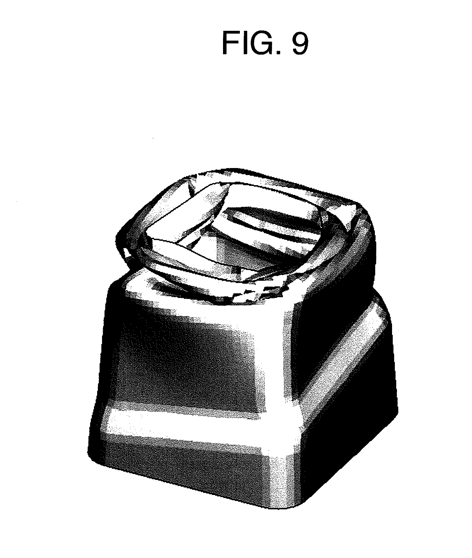

[Fig. 9] A schematic diagram showing an image of still further progress of deformation from Fig. 8.
[Fig. 10] A profile showing an example of fitting the impact absorbing device shown in Fig. 1 and Fig. 2.
[Fig. 11] A profile showing another example of fitting the impact absorbing device shown in Fig. 1 and Fig. 2.

## Claims

1. An impact absorbing device of a vehicle comprising a cylindrical body which has stepped parts and whose diameter gradually changes in an axial direction, wherein said stepped parts are spirally formed around an axis of said cylindrical body.

2. An impact absorbing device of a vehicle, as claimed in Claim 1, wherein said stepped parts are configured of a continuous face having an angle of inclination to said axis.

3. An impact absorbing device of a vehicle, as claimed in Claim 1, wherein the sectional shape of said stepped parts containing said axis is formed in a folded U shape.
